# EUROPÄISCHE PATENTSCHRIFT

(11) **EP 2 838 949 B1**
(45) Veröffentlichungstag und Bekanntmachung des Hinweises auf die Patenterteilung: **12.07.2017**
(21) Anmeldenummer: 13715965.3
(22) Anmeldetag: 10.04.2013
(51) Int. Cl.: C08K 5/3417, C08J 3/24

(54) **INDOLIN-NITROXIDRADIKAL ALS STABILISATOR UND INHIBITOR FÜR REAKTIONSHARZE, DIESES ENTHALTENDE REAKTIONSHARZE UND DEREN VERWENDUNG**
INDOLINE NITROXIDE RADICAL AS STABILISER AND INHIBITOR FOR REACTIVE RESINS, REACTIVE RESINS CONTAINING THIS AND THEIR USE
RADICAL INDOLINE-NITROXYDE COMME STABILISEUR ET INHIBITEUR POUR RESINES REACTIVES AINSI QUE RESINES REACTIVES CONTENANT CELUI-CI ET LEUR UTILISATION

(30) Priorität: 20.04.2012 DE 102012206554
(43) Veröffentlichungstag der Anmeldung: 25.02.2015
(73) Patentinhaber: Hilti Aktiengesellschaft, 9494 Schaan (LI)
(72) Erfinder: LEITNER, Michael, 86899 Landsberg (DE); PFEIL, Armin, 86916 Kaufering (DE)
(74) Vertreter: Hilti Aktiengesellschaft Corporate Intellectual Property
(86) Internationale Anmeldenummer: PCT/EP2013/057429
(87) Internationale Veröffentlichungsnummer: WO 2013/156358

(56) Entgegenhaltungen:
- EP-A1- 0 559 613
- EP-A1- 1 120 430
- EP-A1- 1 564 253
- EP-A1- 2 357 162
- WO-A1-02/28946
- FR-A1- 2 249 859

## Beschreibung

Die vorliegende Erfindung betrifft die Verwendung eines stabilen Indolin-Nitroxidradikals als Stabilisator für Harzmischungen und Reaktionsharzmörtel jeweils auf Basis radikalisch härtbarer Verbindungen und/oder als Inhibitor zur Einstellung der Topfzeit von Harzmischungen und Reaktionsharzmörteln. Ferner betrifft die vorliegende Erfindung eine lagerstabile Reaktionsharzmischung sowie einen lagerstabilen Reaktionsharzmörtel jeweils auf Basis radikalisch härtbarer Verbindungen sowie deren Verwendung als Bindemittel für die chemische Befestigungstechnik.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente, die A Komponente, die Harzmischung und die andere Komponente, die B Komponente, das Härtungsmittel enthält. Als radikalisch härtbare Verbindungen werden häufig, insbesondere für die chemische Befestigungstechnik, Vinylesterharze und ungesättigte Polyesterharze eingesetzt. Andere, übliche Bestandteile, wie organische oder anorganische Zuschlagstoffe, beispielsweise Füllstoffe, Beschleuniger, Stabilisatoren, Inhibitoren, Thixotropiermittel, Phlegmatisierungsmittel, Verdicker und Lösungsmittel einschließlich Reaktivlösungsmittel (Reaktivverdünner) und Farbstoffe, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Für eine gezielte Anwendung ist es zuweilen wichtig, die Polymerisationsreaktion soweit hinauszuzögern, dass nach dem Vermischen der Harzkomponente mit der Härterkomponente die Mischung noch eine gewisse Zeit, auch Topfzeit oder Gelzeit genannt, verarbeitbar bleibt, damit die Mischung beispielsweise in ein Bohrloch eingebracht und ein Befestigungsmittel eingeführt werden kann, bevor diese beginnt auszuhärten (zu polymerisieren). Dies wird durch die Zugabe von Verbindungen erreicht, die in der Lage sind, die beim Vermischen der beiden Komponenten entstehenden Radikale abzufangen, die sogenannten Inhibitoren. Damit die für ein gegebenes System eingestellte Topfzeit auch noch nach Lagerung der Harzkomponente über einen längeren Zeitraum stabil bleibt, darf sich die Inhibitorwirkung während der Lagerung nicht ändern, beispielsweise durch Autooxidation der Verbindungen oder durch systemseitige Einflüsse, damit es zu keiner unerwünschten Veränderung der Aushärteigenschaften der Mischung kommt.

Ein Effekt, der sich negativ auf die Aushärteeigenschaften und die Eigenschaften der ausgehärteten Mörtelmasse auswirken kann, ist die Instabilität des Harzes bzw. der Harzmischung bei Lagerung, die zu einer teilweisen bzw. vollständigen Gelierung, d.h. Polymerisation, des Harzes führen kann. Um dies zu verhindern, werden den Harzmischungen und/oder den Reaktionsharzmörteln Verbindungen zugegeben, die sogenannten Stabilisatoren, die eine frühzeitige Polymerisation des Harzes unterbinden sollen. Dies erfolgt durch Abfangen von sich bildenden Radikalen.

Eine Verbindung kann daher entweder nur Stabilisator oder nur Inhibitor sein oder beides, d.h. sowohl Stabilisator als auch Inhibitor. Bei letzterem hängt die Wirkung wesentlich von der eingesetzten Menge der Verbindung ab. Eine Zugabe in geringen Mengen dient im Allgemeinen als Stabilisator und vermag oft nicht die Topfzeit zu beeinflussen, wohingegen bei einer genügend große Menge die Verbindung neben der stabilisierenden Wirkung auch inhibierend bzw. retardierend sein kann. Hiebei wird zur besseren Unterscheidung zwischen Stabilisator und Inhibitor unterschieden.

Damit sich Verbindungen als Stabilisatoren und Inhibitoren für Harzmischungen und Reaktionsharzmörtel eignen, müssen diese verschiedene Kriterien erfüllen, wie der Einfluss auf die Leistungsfähigkeit der ausgehärteten Harzmasse sowie das Verleihen von Lagerstabilität unter verschiedenen Bedingungen und die Einstellbarkeit der Topfzeit auf ein vorbestimmtes sinnvolles Maß. Allerdings kann keiner der heute verwendeten Verbindungen die genannten Kriterien unter allen (Anwendungs)Bedingungen erfüllen. Es werden daher die Verbindungen in Abhändigkeit von den gewünschten Kriterien und der gewünschten Wirkung gewählt.

Zur Stabilisierung gegen vorzeitige Polymerisation enthalten Harzmischungen und Reaktionsharzmörtel üblicherweise Stabilisatoren, wie Hydrochinon, substituierte Hydrochinone, Phenothiazin, Benzochinon oder tert-Butylbrenzkatechin, wie beispielsweise in der EP 1935860 A1 oder der EP 0965619 A1 beschrieben. Diese Stabilisatoren verleihen dem Reaktionsharzmörtel eine Lagerstabilität von mehreren Monaten, jedoch meist nur in Gegenwart von im Reaktionsharzmörtel gelöstem Sauerstoff. Erfolgt eine Lagerung unter Luftausschluss, setzt schon nach einigen Tagen die Polymerisation ein. Aus diesem Grund mussten bisher die Reaktionsharzmörtel so verpackt werden, dass sie mit Luft in Berührung kommen konnten.

Die DE 19531649 A1 beispielsweise beschreibt die Stabilisierung von Reaktionsharzmörteln auf Basis radikalisch härtbarer Verbindungen gegen frühzeitige Polymerisation unter Luftausschluss mit stabilen Nitroxidradikalen, auch N-oxyl-Radikale genannt, nämlich Piperidinyl-N-oxyl und Tetrahydropyrrol-N-oxyl. Aktuell wird daher 4-Hydroxy-2,2,6,6-tetramethylpiperidin-N-oxyl (auch als Tempol bezeichnet) häufig zur Stabilisierung verwendet, wenn der Reaktionsharzmörtel unter Luftausschluss gelagert wird. Das Tempol hat dabei den Vorteil, dass damit auch die Topfzeit eingestellt werden kann.

Die Erfinder haben jedoch beobachtet, dass die Lagerstabilität von mit Tempol stabilisierten Harzmischungen und Reaktionsharzmörteln, die Säurespuren oder Säuren enthalten, gegenüber solchen, die keine oder kaum Säurespuren oder Säuren enthalten, verringert ist. Ferner wurde bei Reaktionsharzmörteln, die Säurespuren oder Säuren enthalten und deren Topfzeiten mit Tempol auf einen bestimmten Wert eingestellt wurden, teilweise eine Gelzeitdrift beobachtet. Insbesondere größere Mengen an Säure können sich nachteilig auf die Lagerstabilität und die Gelzeitstabilität auswirken.

Die Aufgabe der Erfindung bestand nun darin, lagerstabile Harzmischungen und diese enthaltende Reaktionsharzmörtel jeweils auf Basis radikalisch härtbarer Verbindungen bereitzustellen, die insbesondere bei luftdichten Verpackungen auch in Gegenwart von Säuren eine ausreichend lange Lagerstabilität aufweisen und deren Topfzeit zuverlässig eingestellt werden kann.

Diese Aufgabe wird dadurch gelöst, dass ein stabiles Nitroxidradikal mit einem Indolingrundgerüst als Stabilisator für Reaktionsharzmischungen und diese enthaltende Reaktionsharzmörtel und/oder Inhibitor zur Einstellung der Topfzeit von Harzmischungen und diese enthaltende Reaktionsharzmörtel jeweils auf Basis radikalisch härtbarer Verbindungen eingesetzt wird.

Im Sinne der Erfindung bedeuten:
"*Grundharz*" die reine, härtende bzw. härtbare Verbindung, die für sich oder mit Reaktionsmitteln, wie Härter, Beschleuniger und dergleichen (nicht im Grundharz enthalten), durch Polymerisation härten; die härtbaren Verbindungen können Monomere, Dimere, Oligomere und Präpolymere sein;
"*radikalisch härtbare Verbindung",* dass die Verbindung funktionelle Gruppen enthält, die radikalisch polymerisieren;
"*Harz-Masterbatch*" das Produkt der Herstellung des Grundharzes nach der Synthese (ohne Isolierung des Grundharzes), welches Reaktivverdünner, Stabilisatoren und Katalysatoren enthalten kann;
"*Harzmischung*" eine Mischung aus dem Harz-Masterbatch und Beschleunigern sowie Stabilisatoren und ggf. weiteren Reaktivverdünnern; dieser Begriff wird gleichbedeutend mit dem Begriff "*organisches Bindemittel*" verwendet;
"*Reaktionsharzmörtel*" eine Mischung aus Harzmischung und anorganischen und/oder organischen Zuschlagstoffen; hierfür wird gleichbedeutend der Begriff "A Komponente" verwendet;
"*Reaktionsharzmasse*" eine verarbeitungsfertige, härtende Mischung eines Reaktionsharzmörtels mit dem erforderlichen Härtungsmittel oder Härter; dieser Begriff wird gleichbedeutend mit dem Begriff "Mörtelmasse" verwendet;
"*Härtungsmittel*" Stoffe, welche die Polymerisation (das Härten) des Grundharzes bewirken;
"*Härter*" eine Mischung aus Härtungsmittel, gegebenenfalls Phlegmatisierungsmittel, Lösungsmittel(n) und gegebenenfalls anorganischen und/oder organischen Zuschlagstoffen; dieser Begriff wird gleichbedeutend mit dem Begriff "B Komponente" verwendet;
"*Reaktivverdünner*" flüssige oder niedrigviskose Grundharze, welche andere Grundharze, den Harz-Masterbatch oder die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden;
"*Beschleuniger*" eine zur Beschleunigung der Polymerisationsreaktion (Härtung) fähige Verbindung, die dazu dient, die Bildung des Radikalstarters zu beschleunigen;
"*Stabilisator*" eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Topfzeit nicht beeinflusst wird;
"*Inhibitor*" ebenfalls eine zur Inhibierung bzw. Retardierung der Polymerisationsreaktion (Härtung) fähige Verbindung, die dazu dient, die Polymerisationsreaktion unmittelbar nach der Zugabe des Härtungsmittels zu verzögern; diese Verbindungen werden üblicherweise in solchen Mengen eingesetzt, dass die Topfzeit beeinflusst wird;
"*Lagerstabilität* bzw. "lagerstabil", dass eine Harzmischung oder ein Reaktionsharzmörtel (ohne Zugabe eines Härtungsmittels oder eines Härters) während der Lagerung weder einen Anstieg der Viskosität noch eine Gelierung zeigt;
"*Topfzeit*" (auch "*Gelzeit*"*)* allgemein die maximale Zeitspanne, innerhalb der ein aus mehreren Komponenten bestehendes System nach dem Mischen verarbeitet werden sollte; genauer entspricht dies der Zeitspanne, innerhalb der sich die Temperatur der Reaktionsharzmasse nach deren Herstellung von +25°C auf +35°C erhöht;
"*Gelzeitdrift*" (für einen bestimmten ausgewählten Zeitraum, zum Beispiel 30 oder 60 Tage), bezeichnet das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes bzw. der Reaktionsharzmasse, die beobachtete Topfzeit von der zum Zeitpunkt der Referenz abweicht.

Reaktionsharzmörtel werden in der Regel herstellt, indem die zur Herstellung des Grundharzes erforderlichen Ausgangsverbindungen gegebenenfalls zusammen mit Katalysatoren und Lösungsmitteln, insbesondere Reaktivverdünner, in einen Reaktor gegeben und miteinander zur Reaktion gebracht werden. Nach Beendigung der Reaktion und gegebenenfalls bereits zu Beginn der Reaktion werden zu dem Reaktionsgemisch Verbindungen für die Lagerstabilität, die Stabilisatoren, gegeben. Hierdurch wird der sogenannte Harz-Masterbatch erhalten. Zu dem Harz-Masterbatch werden gegebenenfalls Beschleuniger für die Härtung des Grundharzes und Verbindungen zur Einstellung der Topfzeit, die Inhibitoren, und gegebenenfalls weiteres Lösungsmittel, insbesondere Reaktivverdünner, gegeben, um die Harzmischung zu erhalten. Wie oben erwähnt, können die Verbindungen für die Lagerstabilität (Stabilisatoren) gleich oder ungleich den Verbindungen zur Einstellung der Topfzeit (Inhibitoren) sein. Diese Harzmischung wird zur Einstellung verschiedener Eigenschaften, wie der Rheologie und der Konzentration des Grundharzes, mit anorganischen Zuschlagstoffen versetzt, wodurch der Reaktionsharzmörtel erhalten wird. Der Reaktionsharzmörtel wird zur Lagerung, je nach gedachter Anwendung, in Glaspatronen, Kartuschen oder in Folienbeutel, die gegebenenfalls luftdicht sind, gefüllt.

Bevorzugt enthält damit eine Harzmischung mindestens eine radikalisch härtbare Verbindung, Reaktivverdünner, Beschleuniger, Stabilisatoren und gegebenenfalls weitere Inhibitoren zur Einstellung der Topfzeit und ein Reaktionsharzmörtel neben der eben beschriebenen Harzmischung organische und/oder anorganische Zuschlagstoffe, wobei anorganische Zuschlagstoffe besonders bevorzugt sind, wie sie nachfolgend näher beschrieben werden.

Der Erfindung liegt der Gedanke zugrunde, Harzmischungen und daraus hergestellte Reaktionsharzmörtel, insbesondere solche mit Säurespuren und/oder anorganischen Zuschlägen, mit erhöhter Lagerstabilität bereitzustellen, ohne dass eine aufwendige und kostspielige Reinigung der jeweiligen Komponenten, wie etwa Vorläuferverbindungen, z.B. das polymere Methylendiphenyldiisocyanat (pMDI), oder der Reaktivverdünner erfolgen muss.

Die Erfinder haben herausgefunden, dass die Lagerstabilität von Harzmischungen und diese enthaltende Reaktionsharzmörteln, insbesondere solche, die herstellungsbedingt Säurespuren enthalten, deutlich verbessert werden kann, wenn ein stabiles Nitroxidradikal mit einem Indolingrundgerüst als Stabilisator verwendet wird. Hierdurch können Harzmischungen und Reaktionsharzmörtel auf Basis radikalisch härtbarer Verbindungen hergestellt werden, deren Lagerstabilität deutlich verbessert ist, gegenüber solchen, die mit Tempol stabilisiert werden.

Besonders vorteilhaft an dem verwendeten Indolin-Nitroxidradikal ist, dass damit ferner die Topfzeit einer Harzmischung und die eines diese enthaltenden Reaktionsharzmörtels auf ein vorbestimmtes Maß eingestellt werden kann.

Zwar ist die Verwendung von Indolin-Nitroxidradikalen als Stabilisator für ungesättigte bzw. vinylaromatische Monomere, wie Ethylen bei der radikalisch kontrollierten Polymerisation oder Co-Polymerisation von Ethylen unter hohem Druck oder Methacrylsäure oder deren Derivate, beispielsweise aus der EP 1951772 A1 und der US 2008/274074 A1 bekannt, jedoch handelt es sich bei den beschriebenen ungesättigten bzw. vinylaromatischen Monomeren oder Co-Monomeren nicht um komplexe Systeme, die zum einen größere Moleküle als radikalisch härtbare Verbindungen enthalten und zum anderen mit anorganischen Zuschlägen, welche basisch reagieren, gefüllt sind.

Bei anorganisch gefüllten Systemen, wie sie beispielsweise als Dübelmassen zur chemischen Befestigung von Verankerungselementen Einsatz finden, werden häufig anorganische Zuschlagstoffe eingesetzt, die stark basisch reagieren, z.B. Zement. Ferner werden die radikalisch härtbaren Verbindungen nicht aufgearbeitet, d.h. isoliert, sondern der Harz-Masterbatch wird zur Herstellung der Harzmischungen und der Reaktionsharzmörtel verwendet.

Dem Fachmann ist bekannt, dass die im Harz-Masterbatch enthaltenen Additive sowie die dem Harz-Masterbatch zugegebenen weiteren Additive und Füllstoffe die Stabilität des Grundharzes, also die Neigung zur vorzeitigen Polymerisation ohne Zugabe von Härtungsmittel während der Lagerung, erheblich beeinflussen können. Dabei können die Additive und Füllstoffe sowie deren Konzentration einen unterschiedlichen Effekt bewirken, der nicht kalkulierbar ist. Daher müssen die Systeme erneut beurteilt und deren Eigenschaften eingestellt werden, wenn eine Komponente durch eine andere ausgetauscht wird, selbst wenn diese eine ähnliche Reaktivität erwarten lässt.

Ein erster Gegenstand der Erfindung ist die Verwendung eines stabilen Indol-Nitroxidradikals als Stabilisator und/oder Inhibitor für eine Harzmischung oder einen diese enthaltenden Reaktionsharzmörtel, jeweils auf Basis radikalisch härtbarer Verbindungen.

Erfindungsgemäß geeignete Indolin-Nitroxidradikale werden unter Verbindungen der allgemeinen Formel (I) ausgewählt 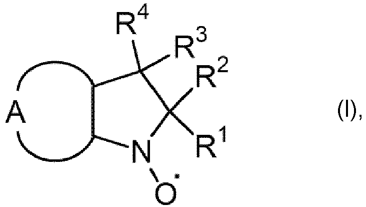 in der
A eine Kohlenwasserstoffgruppe ist, die mit den zwei Kohlenstoffatomen, an welche sie gebunden ist, einen aromatischen gegebenenfalls substituierten Ring bildet, wobei die Substituenten einen oder mehrere gegebenenfalls substituierte aromatische oder aliphatische (an)kondensierte Ringe darstellen können;
R¹, R², R³ und R⁴ gleich oder unterschiedlich sein können und jeweils unabhängig voneinander ein Wasserstoffatom, eine Alkyl-, eine Alkenyl-, eine Aryl- oder eine Aralkylgruppe, -OH, -OR⁵, -COOH, -COOR⁶ oder -CN darstellen, wobei die Gruppen gegebenenfalls substituiert sein können; oder R¹ und R² wie eben definiert sein können und R³ und R⁴ =X sein können, wobei X O oder NR⁷ darstellt; und
R⁵, R⁶, R⁷ jeweils eine gegenenfalls substituierte Alkyl-, Alkenyl-, Aryl- oder Aralkylgruppe darstellen.

Der Ausdruck "*Alkylgruppe*" bedeutet eine lineare oder verzweigte C₁-C₂₀-Alkylgruppe oder C₃-C₂₀-Cycloalkylgruppe, wie beispielsweise eine Methyl-, Ethyl-, *n*-Propyl-, *i*-Propyl-, *n*-Butyl-, *n*-Dodecanyl-, *i*-Butyl-, *t*-Butyl-, Cyclopropyl- oder Cyclohexylgruppe.

Der Ausdruck "*Arylgruppe*" bedeutet eine aromatische Gruppe mit 6 bis 20 Kohlenstoffatomen, wie beispielsweise eine Phenyl-, Naphthyl-, Tolyl- oder Biphenylgruppe.

Der Ausdruck "*Aralkylgruppe*" bedeutet eine Arylgruppe, wie oben definiert, die mit mindestens einer Alkylgruppe, wie oben definiert, substituiert ist, wie beispielsweise eine 2-Phenylethyl-, *t*-Butylbenzyl- oder Benzylgruppe.

Der Ausdruck "*Alkenylgruppe*" bedeutet eine lineare oder verzweigte C₂-C₂₀-Alkenylgruppe oder cyclische C₃-C₂₀-Alkenylgruppe, wie beispielsweise eine Vinyl-, Allyl- und Cyclohexenylgruppe.

Der Ausdruck "*substituiert*" bedeutet, dass die jeweilige Gruppe einen oder mehrere Substituenten enthält, wobei der Substituent ein Halogenatom, eine Alkohol-, Ether-, Amin-, Carbonsäure-, Ester-, Nitril-, Amid-, Nitro-, Thiol-, Thioester-, Silyl-, Phosphin- oder Phosphorylgruppe sein kann.

Bevorzugt stellt wenigstens eines von R¹ und R² eine Gruppe mit einer Molmasse größer als 15 dar; und/oder können R³ und R⁴ =X sein, wobei X wie obenstehend definiert ist; und/oder stellt R¹ einen Arylrest, wie Phenyl oder Mesityl, dar und R² einen C₁-C₄-Alkylrest, wie Methyl, Ethyl, *i*-Propyl, *n*-Butyl, einen Arylrest, wie Phenyl, oder einen Benzyl- oder Allylrest dar.

Besonders bevorzugt ist die Verbindung der allgemeinen Formel (I) ein Indolderivat der allgemeinen Formel (II) 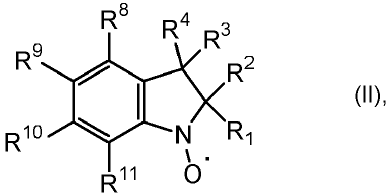 in der
R¹, R², R³, R⁴ wie obenstehend definiert sind;
R⁸ bis R¹¹ identisch oder verschieden sein können und jeweils unabhängig voneinander Wasserstoff oder eine Gruppe, wie für R¹ bis R⁴ definiert, darstellen; oder R⁸ und R⁹ zusammen oder R⁹ und R¹⁰ zusammen oder R¹⁰ und R¹¹ zusammen einen aliphatischen oder aromatischen Ring bilden.

Ganz besonders bevorzugt ist die Verbindung der allgemeinen Formel (II) 2,3-Dihydro-2,2-diphenyl-3-(phenylimino)-1 H-indol-1-oxylnitroxid.

Ein weiterer Gegenstand der Erfindung ist eine unter Verwendung eines stabilen Indol-Nitroxidradikals wie oben beschrieben als Stabilisator und/oder Inhibitor hergestellte Harzmischung. Dabei hängt die Funktion des Indol-Nitroxidradikals, d.h. dessen Verwendung als Stabilisator oder als Inhibitor von dessen eingesetzer Konzentration ab.

Eine solche Harzmischung weist eine erhöhte Lagerstabilität auf, verglichen mit einer Harzmischung, die ein stabiles Nitroxidradikal vom Typ Piperidinyl-N-oxyl oder Tetrahydropyrrol-N-oxyl als Stabilisator enthält.

Als Stabilisator, d.h. ohne die Topfzeit der Harzmischung bzw. des Reaktionsharzmörtels wesentlich zu beeinflussen, wird das Indol-Nitroxidradikal in einer Menge von 0,02 bis 1 Gew.-%, bevorzugt 0,025 bis 0,3 Gew.-% und besonders bevorzugt 0,03 bis 0,06 Gew.-%, bezogen auf die Harzmischung, eingesetzt.

Als Inhibitor, d.h. zur Einstellung der Topfzeit auf ein vorbestimmtes Maß, wird das Indol-Nitroxidradikal in einer Menge von 0,05 bis 2 Gew.-%, bevorzugt 0,1 bis 1,5 Gew.-%, besonders bevorzugt 0,1 bis 1 Gew.-%, bezogen auf die Harzmischung, eingesetzt.

Dem Fachmann ist klar, dass die Wirkungsweise des eingesetzten Indol-Nitroxidradikals, d.h. ob es lediglich als Stabilisator gegen vorzeitiges Gelieren des Harzes oder zusätzlich als Inhibitor zur Einstellung der Topfzeit nach dem Vermischen der Harz- und der Härterkomponente wirkt, nicht nur von dessen eingesetzter Menge sondern auch davon abhängt, ob und ggf. in welcher Menge ein Beschleuniger und in welcher Menge der Radikalinitiator eingesetzt wird. Je geringer die Menge des Beschleunigers und/oder des Radikalinitiators ist, desto früher, d.h. bei geringeren zugegebenen Mengen, beeinflußt das Indol-Nitroxidradikal die Topfzeit. Dementsprechend existiert keine exakte Grenze zwischen Stabilisierungswirkung und Inhibitorwirkung. Der Fachmann kann jedoch ohne großen Aufwand für ein gegebenes System mit bekannter Beschleuniger- und Initiatorkonzentration die Menge an Indol-Nitroxidradikal bestimmen, ab der die Topfzeit beeinflußt werden kann.

Erfindungsgemäß kann die Harzmischung zusätzlich zu oder statt den Indol-Nitroxidradikalen andere Verbindungen enthalten, die der Harzmischung Lagerstabilität verleihen. Solche Verbindungen sind hinreichend bekannt und können in geeigneter Weise durch den Fachmann gewählt werden.

In einer Ausführungsform kann die Harzmischung zur Einstellung der Topfzeit und der Reaktivität zusätzlich 0,005 bis 3 Gew.-%, vorzugsweise 0,01 bis 1 Gew.-%, bezogen auf die Harzmischung, eines anderen Inhibitors, insbesondere eines phenolischen Inhibitors, wie Phenole, Chinone oder Phenothiazine, z. B. 2,6-Di-*tert*-butyl-p-kresol, aber auch Katechine, wie Brenzkatechin und Derivate davon (vgl. EP 1 935 860 A1), enthalten.

Als radikalisch härtbare Verbindungen sind erfindungsgemäß ethylenisch ungesättigte Verbindungen, cyclische Monomere, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt; diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat- funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder-Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylatfunktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylatfunktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acylverbindungen sind Acrylsäure und am Kohlenwasserstoffrest substituierte Acrylsäuren wie Methacrylsäure, hydroxylgruppenhaltige Ester der (Meth)acrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Besonders eignet sich die Verwendung des Indol-Nitroxidradikals in einer Harzmischung, deren härtbarer Bestandteil Spuren an Säure, wie Mineralsäure oder Carbonsäure, enthält, welche beispielsweise bei der Herstellung der radikalisch härtbaren Verbindung oder einer Vorläuferverbindung davon entstehen.

Die Grundharze werden in einer Menge von 20 bis 100 Gew.-%, vorzugsweise 25 bis 65 Gew.-%, bezogen auf die Harzmischung, eingesetzt.

In einer bevorzugten Ausführungsform der Erfindung enthält die Harzmischung mindestens einen Reaktivverdünner für den härtbaren Bestandteil (a), wobei der bzw. die Reaktivverdünner in einer Menge von 0 bis 80 Gew.-%, vorzugsweise 30 bis 60 Gew.-%, bezogen auf die Harzmischung, zugegeben werden. Geeignete Reaktivverdünner sind in der EP 1 935 860 A1 und der DE 195 31 649 A1 beschrieben.

Grundsätzlich können auch andere übliche Reaktivverdünner, allein oder im Gemisch mit (Meth)acrylsäureestern, eingesetzt werden, z. B. Styrol, α-Methylstyrol, alkylierte Styrole, wie *tert*-Butylstyrol, Divinylbenzol, Vinylether und/oder Allylverbindungen.

Gemäß einer weiter bevorzugten Ausführungsform der Erfindung liegt die Harzmischung in vorbeschleunigter Form vor, das heißt sie enthält mindestens einen Beschleuniger für das Härtungsmittel. Bevorzugte Beschleuniger für das Härtungsmittel sind aromatische Amine und/oder Salze von Kobalt, Mangan, Zinn, Vanadium oder Cer. Besonders vorteilhaft haben sich als Beschleuniger Aniline, p- und m-Toluidine und Xylidine, die symmetrisch oder asymmetrisch mit Alkyl- oder Hydroxyalkylresten substituiert sind, erwiesen. Beispielhaft können die folgenden bevorzugten Beschleuniger erwähnt werden: N,N-Dimethylanilin, N,N-Diethylanilin, N,N-Diethylolanilin, N-Ethyl-N-ethylolanilin, N,N-Di-isopropanol-*p*-toluidin, N,N-Diisopropyliden-*p*-toluidin, N,N-Dimethyl-*p*-toluidin, N, N-Diethylol-*p*-toluidin, N,N-Diethylol-m-toluidin, N,N-Diisopropylol-*m*-toluidin, N,N-Bis(2-hydroxyethyl)toluidin, N,N-Bis(2-hydroxyethyl)xylidin, N-Methyl-N-hydroxyethyl-*p*-toluidin, Cobaltoctoat, Cobaltnaphthenat, Vanadium(IV)-acetylacetonat und Vanadium(V)-acetylacetonat.

Der Beschleuniger bzw. die Beschleunigermischung wird erfindungsgemäß in einer Menge von 0,05 bis 5 Gew.-%, vorzugsweise 1 bis 2 Gew.-%, bezogen auf die Harzmischung, eingesetzt.

Die erfindungsgemässen Harzmischungen können zur Herstellung von Reaktionsharzmörteln für die chemische Befestigungstechnik eingesetzt werden. Die erfindungsgemäß hergestellten Reaktionsharzmörtel zeichnen sich - auch in Abwesenheit von Luftsauerstoff - durch eine besonders gute Lagerstabilität aus.

Ein weiterer Gegenstand der Erfindung ist daher ein Reaktionsharzmörtel, der zusätzlich zu der Harzmischung übliche anorganische Zuschlagstoffe, wie Füllstoffe, Verdickungsmittel, Thixotropiermittel, nicht reaktive Lösungsmittel, Mittel zur Verbesserung der Fließfähigkeit und/oder Netzmittel, enthält. Die Füllstoffe sind vorzugsweise aus der Gruppe ausgewählt, bestehend aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat, Polyester, Polyamid oder auch in Form von Mikrokugeln aus Polymeren (Perlpolymerisaten). Bevorzugt und deutlicher verstärkend wirken sich die globulären, inerten Stoffe (Kugelform) aus.

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Ein weiterer Gegenstand der Erfindung ist ein Mehrkomponenten-Mörtelsystem, das mindestens zwei (räumlich) getrennte Komponenten A und B umfasst. Das Mehrkomponenten-Mörtelsystem umfasst zwei oder mehr separate, miteinander verbundene und/oder ineinander verschachtelte Behältnisse, wobei das eine den Reaktionsharzmörtel, und das andere den Härter, der gegebenenfalls mit anorganischen und/oder organischen Zuschlagstoffen gefüllt sein kann, beinhaltet.

Das Mehrkomponenten-Mörtelsystem kann in Form einer Patrone, einer Kartusche oder eines Folienbeutels, vorliegen. Bei der bestimmungsgemäßen Verwendung der erfindungsgemässen Reaktionsharzmörtel werden die Komponente A und die Komponente B entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen in das mit dem aushärtenden Reaktionsharz beschickte Bohrloch eingebracht und entsprechend justiert werden.

Bevorzugte Härter sind lagerstabile organische Peroxide. Besonders gut geeignet sind Dibenzoylperoxid und Methylethylketonperoxid, ferner *tert*-Butylperbenzoat, Cyclohexanonperoxid, Lauroylperoxid und Cumolhydroperoxid, sowie *tert*-Butylperoxy-2-ethylhexanoat.

Die Peroxide werden dabei in Mengen von 0,2 bis 10 Gew.-%, vorzugsweise von 0,3 bis 3 Gew.-%, bezogen auf die den Reaktionsharzmörtel, eingesetzt.

Die Härter werden zweckmäßig durch inerte Füllstoffe phlegmatisiert, wobei Quarzsande bevorzugt sind.

Bei einer besonders bevorzugten Ausführungsform des erfindungsgemäßen Mehrkomponenten-Mörtelsystems enthält die A Komponente neben den härtbaren Verbindungen zusätzlich noch eine hydraulisch abbindende oder polykondensierbare anorganische Verbindung, insbesondere Zement, und die B Komponente neben dem Härtungsmittel noch Wasser. Derartige Hybridmörtelsysteme sind ausführlich in der DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die A Komponente kann als polykondensierbare anorganische Verbindung auch silikatische, polykondensierbare Verbindungen, insbesondere lösliches, gelöstes und/oder amorphes Siliziumdioxid enthaltende Stoffe umfassen.

Der große Vorteil der Erfindung liegt darin, dass eine Prüfung der Komponenten der Harzzusammensetzung, wie etwa der härtbaren Verbindung oder deren Vorläufer auf Säurespuren, wie Mineralsäure, und deren gegebenenfalls erforderliche aufwendige und kostspielige Reinigung nicht mehr erforderlich ist. Die Lagerstabilität insbesondere von Reaktionsharzmörteln erhöht sich signifikant.

Die folgenden Beispiele dienen der weiteren Erläuterung der Erfindung.

### AUSFÜHRUNGSBEISPIELE

### A. Bestimmung der Lagerstabilität

### Beispiel 1 und Vergleichsbeispiel 1

### 1a) Herstellung Harz-Masterbatch

688 g Hydroxypropylmethacrylat werden mit 0,5 mL Dibutylzinndilaurat versetzt. Bei 60°C werden 311 g polymeres Methylendiphenyldiisocyanat (pMDI; Desmodur VL R 20®, maximaler Aciditätswert: 200 ppm HCl; Bayer) langsam zugetropft, wobei die Innentemperatur auf 85°C ansteigt. Nach Beendigung des Zutropfens wird solange nachgerührt, bis der Restisocyanatgehalt auf unter 0,2 % abgesunken ist.

### 1b) Herstellung Harzmischung

Zum so entstandenen Harz-Masterbatch werden 698 g 1,4-Butandioldimethacrylat als Reaktivverdünner und 39 g Bis-(hydroxyethyl)-p-toluidin als Beschleuniger zugesetzt und das Harz mit 9,8 g 2,6-Di-*tert*-butyl-p-kresol und 0,7 g 2,3-Dihydro-2,2-diphenyl-3-(phenylimino)-1 H-indol-1-oxylnitroxid als Stabilisator stabilisiert. Durch Zugabe eines oder mehrerer aromatischer Amine wird die Topfzeit des Harzes auf ca. 7 min. eingestellt.

Als Vergleich (Vergleichsbeispiel 1; V1) werden anstelle der 0,7 g 2,3-Dihydro-2,2-diphenyl-3-(phenylimino)-1 H-indol-1-oxyl-nitroxid 0,7g 4-Hydroxy-2,2,6,6-tetramethylpiperidin-N-oxyl als Stabilisator zugegeben.

### Bestimmung der Lagerstabilität der Harzmischungen

Zur Simulation einer längeren Lagerzeit wurden die Proben einem Thermostabilitätstest bei erhöhter Temperatur unterzogen. Jeweils 20 mL der Harzprobe (Harzmischung) wird in eine sauerstoffdichte Folie (11x17 cm) eingeschweißt und bei 80 °C getempert. Es wird beobachtet, ob es während der Lagerung zu einer Gelierung kommt. Die auftretende spürbare Viskositätszunahme (Konsistenz bei Gelierung: ähnlich flüssiger Honig bis gummibärchenartig (gelartig)) liefert die Aussage zur Thermostabilität. Es wurden jeweils zwei voneinander unabhängige Doppelbestimmungen durchgeführt. Als Ergebnis wurde die maximale Zeit t, bei der die Probe noch nicht geliert ist, erhalten, was den Wert für die Lagerstabilität ergibt.

Die mit 2,3-Dihydro-2,2-diphenyl-3-(phenylimino)-1H-indol-1-oxylnitroxid stabilisierte Harzmischung (Beispiel 1) war mindestens 248 Stunden stabil und die mit 4-Hydroxy-2,2,6,6-tetramethylpiperidin-N-oxyl stabilisierte Harzmischung (V1) war mindestens 48 Stunden stabil.

Wie die Ergebnisse zeigen, konnte die Zeit bis zur Gelierung eines mineralsäurehaltigen Harzes durch die Zugabe von 2,3-Dihydro-2,2-diphenyl-3-(phenylimino)-1H-indol-1-oxyl-nitroxid als Stabilisator um etwa das Fünffache erhöht werden.

### Beispiel 2 und Vergleichsbeispiel 2

### 2) Herstellung Reaktionsharzmörtel

Die wie oben beschrieben hergestellten Harzmischungen (Beispiel 1; Vergleichsbeispiel 1) werden mit 30 bis 45 Gew.-% Quarzsand, 15 bis 25 Gew.-% Zement und 1 bis 5 Gew.-% pyrogener Kieselsäure im Dissolver zu einer homogenen Mörtelmasse gemischt.

Bestimmung der Lagerstabilität der Reaktionsharzmörtel erfolgt analog wie bei den Harzmischungen.

Gelierung bei dem mit 2,3-Dihydro-2,2-diphenyl-3-(phenylimino)-1H-indol-1-oxylnitroxid stabilisierten Reaktionsharzmörtel (Beispiel 2) trat nach etwa 68 Stunden und bei dem mit 4-Hydroxy-2,2,6,6-tetramethylpiperidin-N-oxyl stabilisierten Reaktionsharzmörtel (Vergleichsbeispiel 2; V2) trat nach etwa 47 Stunden ein.

Damit wurde gezeigt, dass es ebenfalls gelungen ist, die Lagerstabilität von anorganisch gefüllten Harzmischungen, den Reaktionsharzmörteln, auf der Basis von säurespurenhaltigen Reaktionsharzen zu erhöhen und damit die Lagerzeit zu verlängern.

### B. Bestimmung der Topfzeit und der Versagensverbundspannungen

### Beispiele 3 und 4 sowie Vergleichsbeispiele 3 und 4

### 3a) Herstellung des Raktionsharzmörtels (A-1)

Dem Harz-Masterbatch gemäß Beispiel 1a) werden 698 g 1,4-Butandioldimethacrylat als Reaktivverdünner und 19,9 g N,N-Bis(hydroxyethyl)-p-toluidin sowie 7,5 g 2,3-Dihydro-2,2-diphenyl-3-(phenylimino)-1H-indol-1-oxylnitroxid zugesetzt. Durch Vermischung mit 50 g pyrogener Kieselsäure, 340 g Tonerdezement und 700 g Quarzsand wird eine fließfähige Zubereitung hergestellt.

### 3b) Herstellung der Härterkomponente (B)

Zur Herstellung der Härterkomponente werden 40 g Dibenzoylperoxid, 250 g Wasser, 25 g pyrogene Kieselsäure, 5 g Schichtsilikat und 700 g Quarzmehl geeigneter Korngrößenverteilung im Dissolver zu einer homogenen Masse gemischt.

### 4) Herstellung eines weiteren Reaktionsmörtels (A-2)

622 g eines kommerziellen Vinylesterharzes auf Basis Bisphenol A werden mit 510 g Hydroxyethylmethacrylat und 568 g Ethylenglycoldimethacrylat vermischt und 19,9 g N,N-Bis(hydroxyethyl)-p-toluidin sowie 8,5 g 2,3-Dihydro-2,2-diphenyl-3-(phenylimino)-1H-indol-1-oxylnitroxid zugesetzt. Durch Abmischung mit 50 g pyrogener Kieselsäure, 340 g Tonerdezement und 700 g Quarzsand wird eine pastöse Masse hergestellt.

### 5) Vergleichsbeispiel 3 (V3)

Als Vergleich wird ein Reaktionsharzmörtel gemäß Beispiel 3a) hergestellt, mit dem Unterschied, dass statt den 7,5 g 2,3-Dihydro-2,2-diphenyl-3-(phenylimino)-1H-indol-1-oxylnitroxid 5,3 g 4-Hydroxy-2,2,6,6-tetramethylpiperidin-N-oxyl verwendet werden.

### 6) Vergleichsbeispiel 4 (V4)

Als weiteren Vergleich wird ein Reaktionsharzmörtel gemäß Beispiel 3a) hergestellt, mit dem Unterschied, dass statt den 7,5 g 2,3-Dihydro-2,2-diphenyl-3-(phenylimino)-1H-indol-1-oxylnitroxid 5,4 g 2,6-Di-*tert*-butyl-*p*-kresol verwendet werden.

Die Harzkomponenten (A-1) und (A-2) sowie die Härterkomponente (B) werden jeweils im Volumenverhältnis von 3:1 miteinander vermischt, wobei Mörtelmassen erhalten werden.

### Bestimmung der Topfzeiten der Mörtelmassen

Die Bestimmung der Topfzeiten der in dieser Weise erhaltenen Mörtelmassen erfolgt mit einer handelsüblichen Vorrichtung (GELNORM®-Gel Timer) bei einer Temperatur von 25°C. Hierzu werden die Komponenten gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Temperatur der Probe wird gegen die Zeit aufgetragen. Die Auswertung erfolgt gemäß DIN16945, Blatt 1 und DIN 16916. Die Topfzeit ist die Zeit, bei der ein Temperaturanstieg um 10K erreicht wird, hier von 25°C nach 35°C.

Die Ergebnisse der Topfzeitbestimmungen sind in Tabelle 1 aufgeführt.

### Bestimmung der Versagensverbundspannungen

Zur Bestimmung der Versagensverbundspannungen der ausgehärteten Masse verwendet man Ankergewindestangen M12, die in Bohrlöcher in Beton mit einem Durchmesser von 14 mm und einer Bohrlochtiefe von 72 mm mit den Reaktionsharzmörtel-Zusammensetzungen der Beispiele und Vergleichsbeispiele eingedübelt werden. Man ermittelt die mittleren Versagenslasten durch zentrisches Ausziehen der Ankergewindestangen. Es werden jeweils drei Ankergewindestangen eingedübelt und nach 24 Aushärtung ihre Lastwerte bestimmt. Die hierbei ermittelten Versagensverbundspannungen (N/mm²) sind als Mittelwert in der nachfolgenden Tabelle 1 ebenfalls aufgeführt.

Verschiedene Bohrlochbedingungen und/oder Aushärtebedingungen wurden wie nachfolgend aufgelistet getestet.

| Testbedingung | Anmerkung |
|---|---|
| Referenz | gut gereinigtes, hammergebohrtes Bohrloch, Aushärtung bei Raumtemperatur (+20°C) |
| -10°C | Referenzlöcher, Setzen und Aushärten bei einer Untergrundtemperatur von -10°C |
| +40°C | Referenzlöcher, Setzen und Aushärten bei einer Untergrundtemperatur von +40°C |

Die Ergebnisse der Bestimmung der Versagensverbundspannungen sind ebenfalls in Tabelle 1 aufgeführt.

**Tabelle 1: Ergebnisse der Bestimmung der Topfzeiten und der Versagensverbundspannungen**

| **Beispiel** | | **3** | **4** | **V3** | **V4** |
|---|---|---|---|---|---|
| Topfzeit (25°C) [min] | | 5:30 | 5:00 | 5:00 | 6:00 |
| Lagerstabilität gemäß Beispiel 2 | | > 48 h | > 48 h | < 24 h | < 24 h |
| Versagensverbundspannung [N/mm²] | -10°C | 10,7 | 14,3 | 19,5 | 18,2 |
| | +20°C | 20,7 | 21,3 | 20,9 | 21,0 |
| | +40°C | 23,2 | 23,5 | 21,5 | 22,9 |

Aus der Tabelle wird ersichtlich, dass es möglich ist, mit 2,3-Dihydro-2,2-diphenyl-3-(phenylimino)-1H-indol-1-oxylnitroxid die Topfzeit einer Mörtelmasse gezielt einzustellen. Darüberhinaus konnte gezeigt werden, dass die Versagensverbundspannungen unter Referenzbedingungen sowie bei +40°C im Bereich der von Mörtelmassen liegen, deren Topfzeit mit den bekannten Inhibitoren 4-Hydroxy-2,2,6,6-tetramethylpiperidin-N-oxyl und 2,6-Di-*tert*-butyl-*p*-kresol auf 5:00 min bzw. 6:00 min eingestellt wurde.

Bei Lagerung wird der gleiche Sauerstoffeinfluß auf die Topfzeitstabilität der mit 2,3-Dihydro-2,2-diphenyl-3-(phenylimino)-1H-indol-1-oxylnitroxid inhibierten Reaktionsharzmörtel beobachtet bei mit 4-Hydroxy-2,2,6,6-tetramethylpiperidin-N-oxyl inhibierten Reaktionsharzmörteln. Dies bedeutet, dass unter Sauerstoffausschluss gelagerte erfindungsgemäße Reaktionsharzmörtel eine Gelzeitdrift zeigen, hingegen in Gegenwart von Sauerstoff gelagerte erfindungsgemäße Reaktionsharzmörtel nicht.

Damit wurde gezeigt, dass es gelungen ist, die Lagerstabilität sowohl von Harzmischungen als auch von anorganisch gefüllten Harzmischungen auf der Basis von säurespurenhaltigen Reaktionsharzen zu erhöhen und damit die Lagerzeit signifikant zu verlängern. Ferner konnte gezeigt werden, dass es möglich ist, mit den Indol-Nitroxidradikalen zusätzlich die Topfzeit einzustellen.

## Patentansprüche

1. Verwendung eines stabilen Nitroxidradikals als Stabilisator und/oder Inhibitor für eine Harzmischung oder einen Reaktionsharzmörtel auf Basis radikalisch härtbarer Verbindungen, wobei das stabile Nitroxidradikal unter Verbindungen der allgemeinen Formel (I) 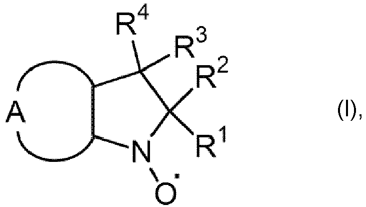 in der
A eine Kohlenwasserstoffgruppe ist, die mit den zwei Kohlenstoffatomen, an welche sie gebunden ist, einen aromatischen gegebenenfalls substituierten Ring bildet, wobei die Substituenten einen oder mehrere gegebenenfalls substituierte aromatische oder aliphatische kondensierte Ringe darstellen können;
R¹, R², R³, und R⁴ gleich oder unterschiedlich sein können, und jeweils unabhängig voneinander ein Wasserstoffatom, eine Alkyl-, eine Alkenyl-, eine Aryl- oder eine Aralkylgruppe, -OH,-OR⁵, -COOH, -COOR⁶ oder -CN darstellen,;
R³ und R⁴ =X sein können, wobei X O oder NR⁷ darstellt; und
R⁵, R⁶, R⁷ jeweils eine Alkyl-, Alkenyl-, Aryl- oder Aralkylgruppe darstellen, ausgewählt ist.

2. Verwendung nach Anspruch 1, wobei in Formel (I)
wenigstens eines von R¹ und R² eine Gruppe mit einer Molmasse größer als 15 darstellt; und/oder
R³ und R⁴ =X darstellen, wobei X wie obenstehend definiert ist; und/oder
R¹ einen Arylrest, wie Phenyl oder Mesityl, darstellt und
R² einen C₁-C₄-Alkylrest, wie Methyl, Ethyl, i-Propyl, n-Butyl, einen Arylrest, wie Phenyl, einen Bezyl- oder Allylrest darstellt.

3. Verwendung nach Anspruch 2, wobei das stabile Nitroxidradikal unter Verbindungen der allgemeinen Formel (II) 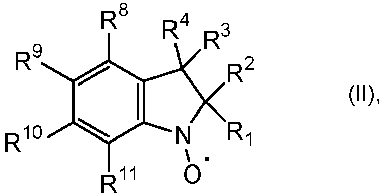 in der
R¹, R², R³, R⁴ wie in Anspruch 1 definiert sind;
R⁸ bis R¹¹ identisch oder verschieden, jeweils unabhängig voneinander Wasser oder eine Gruppe, wie für R¹ bis R⁴ definiert, darstellen; oder R⁸ und R⁹ oder R⁹ und R¹⁰ oder R¹⁰ und R11 zur Bildung eines aliphatischen oder aromatischen Zyklus miteinander verbunden sind,
ausgewählt ist.

4. Verwendung nach Anspruch 3, wobei das stabile Nitroxidradikal 2,3-Dihydro-2,2-diphenyl-3-(phenylimino)-1H-indol-1-oxylnitroxid ist.

5. Verwendung nach einem der vorhergehenden Ansprüche, wobei die radikalisch härtbare Verbindung durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, erhalten wird.

6. Verwendung nach einem der vorhergehenden Ansprüche, wobei der Reaktionsharzmörtel mindestens einen anorganischen Zuschlagstoff enthält, ausgewählt aus der Gruppe bestehend aus Füllstoffen, Verdickungsmitteln, Thixotropiermitteln, nicht reaktiven Lösungsmitteln, Mitteln zur Verbesserung der Fließfähigkeit und/oder Netzmitteln.

7. Verwendung nach Anspruch 6, wobei der mindestens eine anorganische Zuschlagstoff Zement und/oder Quarzsand ist.

8. Harzmischung, umfassend mindestens eine radikalisch härtbare Verbindung, mindestens einen Reaktivverdünner und einen Stabilisator und/oder Inhibitor, wobei der Stabilisator und/oder Inhibitor ein stabiles Nitroxidradial ist, das unter Verbindungen der allgemeinen Formel (I) 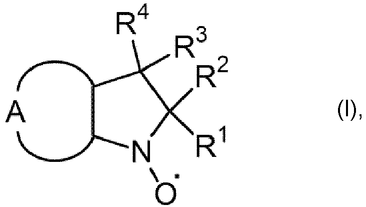 in der
A eine Kohlenwasserstoffgruppe ist, die mit den zwei Kohlenstoffatomen, an welche sie gebunden ist, einen aromatischen gegebenenfalls substituierten Ring bildet, wobei die Substituenten einen oder mehrere gegebenenfalls substituierte aromatische oder aliphatische kondensierte Ringe darstellen können;
R¹, R², R³, und R⁴ gleich oder unterschiedlich sein können, und jeweils unabhängig voneinander ein Wasserstoffatom, eine Alkyl-, eine Alkenyl-, eine Aryl- oder eine Aralkylgruppe, -OH,-OR⁵, -COOH, -COOR⁶ oder -CN darstellen,;
R³ und R⁴ =X sein können, wobei X O oder NR⁷ darstellt; und
R⁵, R⁶, R⁷ jeweils eine Alkyl-, Alkenyl-, Aryl- oder Aralkylgruppe darstellen, ausgewählt ist.

9. Harzmischung nach Anspruch 8, wobei in Formel (I)
wenigstens eines von R¹ und R² eine Gruppe mit einer Molmasse größer als 15 darstellt; und/oder
R³ und R⁴ =X darstellen, wobei X wie obenstehend definiert ist; und/oder
R¹ einen Arylrest, wie Phenyl oder Mesityl, darstellt und
R² einen C₁-C₄-Alkylrest, wie Methyl, Ethyl, i-Propyl, n-Butyl, einen Arylrest, wie Phenyl, einen Bezyl- oder Allylrest darstellt.

10. Harzmischung nach Anspruch 9, wobei das stabile Nitroxidradikal unter
Verbindungen der allgemeinen Formel (II) 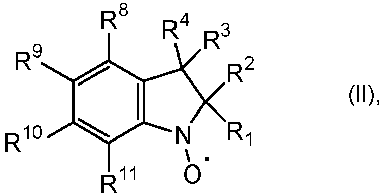 in der
R¹, R², R³, R⁴ wie in Anspruch 1 definiert sind;
R⁸ bis R¹¹ identisch oder verschieden, jeweils unabhängig voneinander Wasser oder eine Gruppe, wie für R¹ bis R⁴ definiert, darstellen; oder R⁸ und R⁹ oder R⁹ und R¹⁰ oder R¹⁰ und R11 zur Bildung eines aliphatischen oder aromatischen Zyklus miteinander verbunden sind,
ausgewählt ist.

11. Harzmischung nach einem der Ansprüche 8 bis 10, wobei der Stabilisator und/oder Inhibitor 2,3-Dihydro-2,2-diphenyl-3-(phenylimino)-1H-indol-1-oxylnitroxid ist.

12. Harzmischung nach einem der Ansprüche 8 bis 11, wobei das stabile Nitroxidradikal in einer Menge von 0,02 bis 1 Gew.-%, bezogen auf die Harzmischung, enthalten ist.

13. Harzmischung nach einem der Ansprüche 8 bis 11, wobei das stabile Nitroxidradikal in einer Menge von 0,05 bis 2 Gew.-%, bezogen auf die Harzmischung, enthalten ist.

14. Harzmischung nach einem der Ansprüche 8 bis 13, wobei die radikalisch polymerisierbare Verbindung durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, erhalten wird.

15. Harzmischung nach einem der Ansprüche 8 bis 14, die ferner mindestens einen Beschleuniger für die Härtung der radikalisch härtenden Verbindung enthält.

16. Reaktionsharzmörtel, der eine Harzmischung nach einem der Ansprüche 8 bis 15 enthält.

17. Reaktionsharzmörtel nach Anspruch 16, der mindestens einen anorganischen Zuschlagstoff enthält, ausgewählt aus der Gruppe bestehend aus Füllstoffen, Verdickungsmitteln, Thixotropiermitteln, nicht reaktiven Lösungsmitteln, Mitteln zur Verbesserung der Fließfähigkeit und/oder Netzmitteln.

18. Reaktionsharzmörtel nach Anspruch 17, wobei der mindestens eine anorganische Zuschlagstoff Zement und/oder Quarzsand ist.

19. Mehrkomponenten-Mörtelsystem, enthaltend als A Komponente den Reaktionsharzmörtel nach einem der Ansprüche 16 bis 18 und als B Komponente einen Härter für die radikalisch härtbare Verbindung.

20. Mehrkomponenten-Mörtelsystem nach Anspruch 19, wobei die A Komponente neben dem Reaktionsharzmörtel zusätzlich noch eine hydraulisch abbindende oder polykondensierbare anorganische Verbindung und die B Komponente neben dem Härter zusätzlich noch Wasser enthält.

21. Verwendung des Mehrkomponenten-Mörtelsystems nach Anspruch 19 oder 20 als Bindemittel zur chemischen Befestigung.

22. Patrone, Kartusche oder Folienbeutel, umfassend das Mehrkomponenten-Mörtelsystem nach Anspruch 19 oder 20, wobei sie zwei oder mehrere voneinander getrennte Kammern umfassen, in welchen der Reaktionsharzmörtel bzw. der Härter angeordnet sind.

## Claims

1. Use of a stable nitroxide radical as a stabiliser and/or inhibitor for a resin mixture or a reaction resin mortar based on radically hardenable compounds, in which the stable nitroxide radical is selected from compounds of the general formula (I) 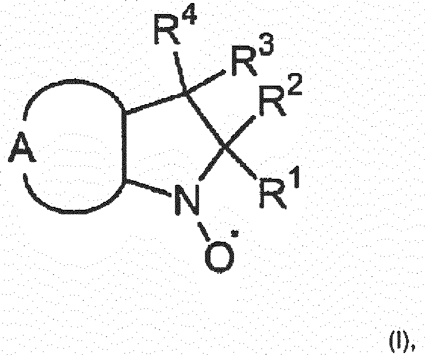 in which
A is a hydrocarbon group, which with the two carbon atoms, to which it is bonded, forms an aromatic possibly substituted ring, in which the substituents may represent one or more possibly substituted aromatic or aliphatic condensed rings;
R¹, R², R³, and R⁴ may be the same or different and each independently of the others represents a hydrogen atom, an alkyl, alkenyl, aryl or aralkyl group, - OH,-OR⁵, -COOH, -COOR⁶ or -CN;
R³ and R⁴ may be =X, in which X represents O or NR⁷; and
R⁵, R⁶, R⁷ each represent an alkyl, alkenyl, aryl or aralkyl group.

2. Use according to claim 1, in which in the formula (I)
at least one of R¹ and R² represents a group with a molar mass greater than 15; and/or
R³ and R⁴ represent =X, in which X is defined as above; and/or
R¹ represents an aryl radical, such as phenyl or mesityl, and
R² represents a C₁-C₄ alkyl radical, such as methyl, ethyl, i-propyl, n-butyl, an aryl radical, such as phenyl, a benzyl or allyl radical.

3. Use according to claim 2, in which the stable nitroxide radical is selected from compounds of the general formula (II) 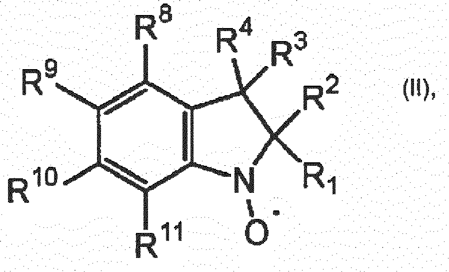 in which
R¹, R², R³, R⁴ are as defined in claim 1;
R⁸ to R¹¹ are identical or different, each independently of the others represents water or a group, as defined for R¹ to R⁴; or R⁸ and R⁹ or R⁹ and R¹⁰ or R¹⁰ and R11 are bonded to each other to form an aliphatic or aromatic cycle.

4. Use according to claim 3, in which the stable nitroxide radical is 2,3-dihydro-2,2-diphenyl-3-(phenylimino)-1 H-indol-1-oxyl nitroxide.

5. Use according to one of the previous claims, in which the radically hardenable compound is obtained by converting di- and/or higher functional isocyanates with suitable acryl compounds, possibly involving hydroxyl compounds, which contain at least two hydroxyl groups.

6. Use according to one of the previous claims, in which the reaction resin mortar contains at least one anorganic additive, selected from the group consisting of fillers, thickeners, thixotropic agents, non-reactive solvents, agents to improve flowability and/or wetting agents.

7. Use according to claim 6, in which the at least one anorganic additive is cement and/or quartz sand.

8. Resin mixture, comprising at least one radically hardenable compound, at least one reactive thinner and a stabiliser and/or inhibitor, in which the stabiliser and/or inhibitor is a stable nitroxide radical, which is selected from compounds of the general formula (I) 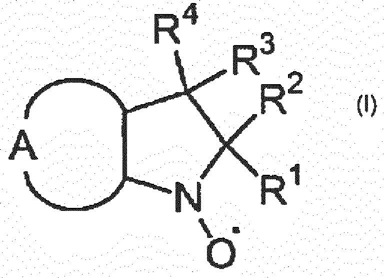 in which
A is a hydrocarbon group, which with the two carbon atoms, to which it is bonded, forms an aromatic possibly substituted ring, in which the substituents may represent one or more possibly substituted aromatic or aliphatic condensed rings;
R¹, R², R³, and R⁴ may be the same or different and each independently of the others represents a hydrogen atom, an alkyl, alkenyl, aryl or aralkyl group, - OH,-OR⁵, -COOH, -COOR⁶ or -CN;
R³ and R⁴ may be =X, in which X represents O or NR⁷; and
R⁵, R⁶, R⁷ each represent an alkyl, alkenyl, aryl or aralkyl group.

9. Resin mixture according to claim 8, in which in the formula (I)
at least one of R¹ and R² represents a group with a molar mass greater than 15; and/or
R³ and R⁴ represent =X, in which X is as defined above; and/or
R¹ represents an aryl radical, such as phenyl or mesityl, and
R² represents a C₁-C₄ alkyl radical, such as methyl, ethyl, i-propyl, n-butyl, an aryl radical, such as phenyl, a benzyl or allyl radical.

10. Resin mixture according to claim 9, in which the stable nitroxide radical is selected from compounds of the general formula (II) 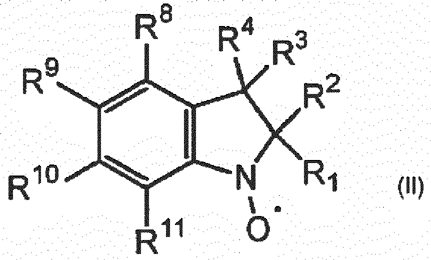 in which
R¹, R², R³, R⁴ are as defined in claim 1;
R⁸ to R¹¹ are identical or different, each independently of the others represents water or a group, as defined for R¹ to R⁴; or R⁸ and R⁹ or R⁹ and R¹⁰ or R¹⁰ and R11 are bonded to each other to form an aliphatic or aromatic cycle.

11. Resin mixture according to one of claims 8 to 10, in which the stabiliser and/or inhibitor is 2,3-dihydro-2,2-diphenyl-3-(phenylimino)-1H-indol-1-oxyl nitroxide.

12. Resin mixture according to one of claims 8 to 11, in which the stable nitroxide radical is contained in a quantity of 0.02 to 1% by weight in relation to the resin mixture.

13. Resin mixture according to one of claims 8 to 11, in which the stable nitroxide radical is contained in a quantity of 0.05 to 2% by weight in relation to the resin mixture.

14. Resin mixture according to one of claims 8 to 13, in which the radically polymerisable compound is obtained by converting di- and/or higher functional isocyanates with suitable acryl compounds, possibly involving hydroxyl compounds, which contain at least two hydroxyl groups.

15. Resin mixture according to one of claims 8 to 14, which also contains at least one accelerator for hardening the radically hardening compound.

16. Reaction resin mortar, which contains a resin mixture according to one of claims 8 to 15.

17. Reaction resin mortar according to claim 16, which contains at least one anorganic additive, selected from the group consisting of fillers, thickeners, thixotropic agents, non-reactive solvents, agents for improving flowability and/or wetting agents.

18. Reaction resin mortar according to claim 17, in which the at least one anorganic additive is cement and/or quartz sand.

19. Multi-component mortar system, containing the reaction resin mortar according to one of claims 16 to 18 as the A component and a hardener for the radically hardenable compound as the B component.

20. Multi-component mortar system according to claim 19, in which the A component also contains a hydraulically setting or polycondensable anorganic compound as well as the reaction resin mortar and the B component contains water as well as the hardener.

21. Use of the multi-component mortar system according to claim 19 or 20 as a binder for chemical fastening.

22. Cartridges or foil bags, comprising the multi-component mortar system according to claim 19 or 20, in which they comprise two or more chambers separated from each other, in which the reaction resin mortar or the hardener are arranged.

## Revendications

1. Utilisation d'un radical nitroxyde stable en tant que stabilisant et/ou inhibiteur pour un mélange de résines ou un mortier à base de résine de réaction, à base de composés à durcissement radicalaire, le radical nitroxyde stable étant choisi parmi les composés de formule générale (I) 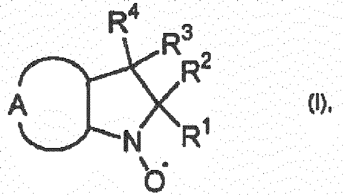 dans laquelle
A est un groupe hydrocarboné, qui avec les deux atomes de carbone auxquels il est lié forme un noyau aromatique éventuellement substitué, les substituants pouvant représenter un ou plusieurs noyaux condensés, aromatiques ou aliphatiques, éventuellement substitués ;
R¹, R², R³ et R⁴ peuvent être identiques ou différents, et chacun d'eux représente, indépendamment des autres, un atome d'hydrogène, un groupe alkyle, alcényle, aryle ou aralkyle, -OH, -OR⁵, -COOH, -COOR⁶ ou -CN ;
R³ et R⁴ peuvent être X, X représentant O ou NR⁷ ; et
R⁵, R⁶, R⁷ représentent chacun un groupe alkyle, alcényle, aryle ou aralkyle.

2. Utilisation selon la revendication 1, pour laquelle, dans la formule (I),
au moins l'un de R¹ et R² représente un groupe ayant une masse moléculaire supérieure à 15 ; et/ou
R³ et R⁴ représentent X, X étant tel que défini ci-dessus ; et/ou
R¹ représente un radical aryle, tel que phényle ou mésityle, et
R² représente un radical alkyle en C₁-C₄, tel que le groupe méthyle, éthyle, isopropyle, n-butyle, un radical aryle tel que le groupe phényle, un radical benzyle ou allyle.

3. Utilisation selon la revendication 2, pour laquelle le radical nitroxyde stable est choisi parmi les composés de formule générale (II) 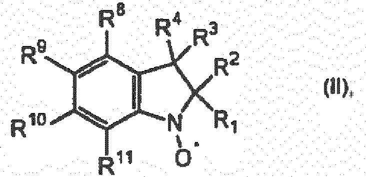 dans laquelle
R¹, R², R³, R⁴ sont tels que définis dans la revendication 1 ;
R⁸ à R¹¹ sont identiques ou différents, et représentent chacun indépendamment des autres l'eau ou un groupe tel que défini pour R¹ à R⁴ ; ou R⁸ et R⁹, ou R⁹ et R¹⁰, ou R¹⁰ et R¹¹, sont reliés l'un à l'autre pour former un cycle aliphatique ou aromatique.

4. Utilisation selon la revendication 3, pour laquelle le radical nitroxyde stable est le nitroxyde de 2,3-dihydro-2,2-diphényl-3-(phénylimino)-1H-indol-1-oxyle.

5. Utilisation selon l'une des revendications précédentes, pour laquelle le composé à durcissement radicalaire est obtenu par réaction d'isocyanates bifonctionnels et/ou à fonctionnalité plus élevée, avec des composés acrylés appropriés, éventuellement avec participation de composés hydroxy qui contiennent au moins deux groupes hydroxyle.

6. Utilisation selon l'une des revendications précédentes, pour laquelle le mortier à base de résine de réaction contient au moins un granulat inorganique, choisi dans le groupe consistant en les charges, les épaississants, les agents de thixotropie, les solvants non réactifs, les agents pour améliorer la fluidité et/ou les mouillants.

7. Utilisation selon la revendication 6, pour laquelle l'au moins un granulat inorganique est un ciment et/ou un sable quartzeux.

8. Mélange de résines comprenant au moins un composé à durcissement radicalaire, au moins un diluant réactif et un stabilisant et/ou un inhibiteur, le stabilisant et/ou l'inhibiteur étant un radical nitroxyde stable, qui est choisi parmi les composés de formule (I) 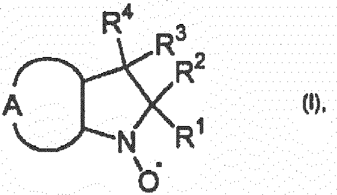 dans laquelle
A est un groupe hydrocarboné, qui avec les deux atomes de carbone auxquels il est lié forme un noyau aromatique éventuellement substitué, les substituants pouvant représenter un ou plusieurs noyaux condensés, aromatiques ou aliphatiques, éventuellement substitués ;
R¹, R², R³ et R⁴ peuvent être identiques ou différents, et chacun d'eux représente, indépendamment des autres, un atome d'hydrogène, un groupe alkyle, alcényle, aryle ou aralkyle, -OH, -OR⁵, -COOH, -COOR⁶ ou -CN ;
R³ et R⁴ peuvent être X, X représentant O ou NR⁷ ; et
R⁵, R⁶, R⁷ représentent chacun un groupe alkyle, alcényle, aryle ou aralkyle.

9. Mélange de résines selon la revendication 8, pour lequel, dans la formule (I),
au moins l'un de R¹ et R² représente un groupe ayant une masse moléculaire supérieure à 15 ; et/ou
R³ et R⁴ représentent X, X étant tel que défini ci-dessus ; et/ou
R¹ représente un radical aryle, tel que phényle ou mésityle, et
R² représente un radical alkyle en C₁-C₄, tel que le groupe méthyle, éthyle, isopropyle, n-butyle, un radical aryle tel que le groupe phényle, un radical benzyle ou allyle.

10. Mélange de résines selon la revendication 9, dans laquelle le radical nitroxyde stable est choisi parmi les composés de formule générale (II) 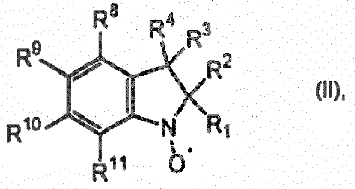 dans laquelle
R¹, R², R³, R⁴ sont tels que définis dans la revendication 1 ;
R⁸ à R¹¹ sont identiques ou différents, et représentent chacun indépendamment des autres l'eau ou un groupe tel que défini pour R¹ à R⁴ ; ou R⁸ et R⁹, ou R⁹ et R¹⁰, ou R¹⁰ et R¹¹, sont reliés l'un à l'autre pour former un cycle aliphatique ou aromatique.

11. Mélange de résines selon l'une des revendications 8 à 10, dans lequel le stabilisant et/ou l'inhibiteur sont le nitroxyde de 2,3-dihydro-2,2-diphényl-3-(phénylimino)-1H(indol-1-oxyle.

12. Mélange de résines selon l'une des revendications 8 à 11, dans lequel le radical nitroxyde stable est présent en une quantité de 0,02 à 1 % en poids, par rapport au mélange de résines.

13. Mélange de résines selon l'une des revendications 8 à 11, dans lequel le radical nitroxyde stable est présent en une quantité de 0,05 à 2 % en poids, par rapport au mélange de résines.

14. Mélange de résines selon l'une des revendications 8 à 13, dans lequel le composé à polymérisation radicalaire est obtenu par réaction d'isocyanates difonctionnels et/ou à fonctionnalité plus élevée avec des composés acrylés appropriés, éventuellement avec participation de composés hydroxy qui contiennent au moins deux groupes hydroxyle.

15. Mélange de résines selon l'une des revendications 8 à 14, qui contient en outre au moins un accélérateur pour le durcissement du composé à durcissement radicalaire.

16. Mortier à base de résine de réaction, qui contient un mélange de résines selon l'une des revendications 8 à 15.

17. Mortier à base de résine de réaction selon la revendication 16, qui contient au moins un granulat inorganique, choisi dans le groupe consistant en les charges, les épaississants, les agents de thixotropie, les solvants non réactifs, les agents pour améliorer la fluidité et/ou les mouillants.

18. Mortier à base de résine de réaction selon la revendication 17, dans lequel l'au moins un granulat inorganique est un ciment et/ou un sable quartzeux.

19. Système de mortier à plusieurs composants, contenant en tant que Composant A le mortier à base de résine de réaction selon l'une des revendications 16 à 18 et en tant que Composant B un durcisseur pour le composé à durcissement radicalaire.

20. Système de mortier à plusieurs composants selon la revendication 19, dans lequel le Composant A contient encore en outre, en plus du mortier à base d'une résine de réaction, un composé inorganique à prise hydraulique ou polycondensable, et le Composant B contient en outre encore, en plus du durcisseur, de l'eau.

21. Utilisation du système de mortier à plusieurs composants selon la revendication 19 ou 20, en tant que liant pour consolidation chimique.

22. Cartouche, étui ou sachet, comprenant le système de mortier à plusieurs composants selon la revendication 19 ou 20, qui comprennent deux ou plusieurs compartiments, séparés l'un de l'autre, dans lesquels est disposé le mortier de résine de réaction ou le durcisseur.
